# FASCICULE DE BREVET EUROPEEN

(11) **EP 3 215 555 B1**
(45) Date de publication et mention de la délivrance du brevet: **22.08.2018**
(21) Numéro de dépôt: 15801905.9
(22) Date de dépôt: 06.11.2015
(51) Int. Cl.: C08G 77/08, C08L 83/04, C08L 83/14

(54) **NOUVEAUX CATALYSEURS DE RÉTICULATION DE COMPOSITIONS SILICONES**
NEUARTIGE SILIKONZUSAMMENSETZUNG ZUR VERNETZUNG VON KATALYSATOREN
NOVEL SILICONE COMPOSITION CROSSLINKING CATALYSTS

(30) Priorité: 07.11.2014 FR 1460803
(43) Date de publication de la demande: 13.09.2017
(73) Titulaire: ELKEM SILICONES France SAS, 69003 Lyon (FR); Université Claude Bernard Lyon 1, 69622 Villeurbanne Cedex (FR); Centre National de la Recherche Scientifique (C.N.R.S.), 75016 Paris (FR)
(72) Inventeur: MONTEIL, Vincent, F-69003 Lyon (FR); RAYNAUD, Jean, F-69100 Villeurbanne (FR); CROZET, Delphine, F-69100 Villeurbanne (FR); BOUSQUIÉ, Magali, F-69003 Lyon (FR); MARROT, Sebastien, F-69008 Lyon (FR)
(74) Mandataire: Cabinet Plasseraud
(86) Numéro de dépôt international: PCT/FR2015/053012
(87) Numéro de publication internationale: WO 2016/071651

(56) Documents cités:
- EP-A2- 0 604 104
- WO-A1-2013/052838
- FR-A1- 2 207 924
- BOGDAN MARCINIEC ET AL: "Catalysis of hydrosilylation Part XXV. Effect of nickel(O) and nickel(II) complex catalysts on dehydrogenative silylation, hydrosilylation and dimerization of vinyltriethoxysilane", JOURNAL OF ORGANOMETALLIC CHEMISTRY, vol. 484, no. 1-2, 27 décembre 1994 (1994-12-27), pages 147-151, XP055180965, ISSN: 0022-328X, DOI: 10.1016/0022-328X(94)87198-1
- Bogdan Marciniec ET AL: "Catalysis of hydrosilylation XX *. Unusual reaction of vinyltriethoxysilane with triethoxysilane catalyzed by nickel acetylacetonate", Journal of Organometallic Chemistry Lausanne JOM, 15 octobre 1991 (1991-10-15), pages 61-67, XP055180963, Extrait de l'Internet: URL:http://ac.els-cdn.com/0022328X9186346R /1-s2.0-0022328X9186346R-main.pdf?_tid=59d d15b4-d91c-11e4-9e20-00000aacb362&acdnat=1 427967831_5ba20ce87c32113fd6220a6601545c16 [extrait le 2015-04-02]

## Description

### DOMAINE DE L'INVENTION

La présente invention concerne le domaine des matériaux obtenus par réticulation de compositions silicones dans lesquelles sont mis en contact des réactifs possédant au moins deux liaisons insaturées et des composés organosiliciés possédant au moins deux motifs hydrogénosilylés (≡SiH) en présence d'un catalyseur **C** qui est un complexe répondant à la formule suivante:

[Ni (L¹)₂]

dans laquelle le symbole Ni représente le nickel au degré d'oxydation II, et les symboles L¹, identiques ou différents, représentent un ligand qui est un anion β-dicarbonylato ou l'anion énolate d'un composé β-dicarbonylé.

### ARRIERE-PLAN TECHNOLOGIQUE

Dans le domaine de la réticulation des compositions silicones, l'hydrosilylation, également appelée polyaddition, est une réaction prépondérante.

Lors d'une réaction d'hydrosilylation, un composé comprenant au moins une insaturation réagit avec un composé comprenant au moins un atome d'hydrogène lié à un atome de silicium. Cette réaction peut par exemple être décrite par l'équation réactionnelle (1) dans le cas d'une insaturation de type alcène : 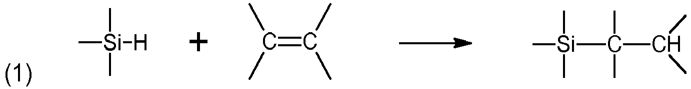 ou par l'équation réactionnelle (2) dans le cas d'une insaturation de type alcyne :

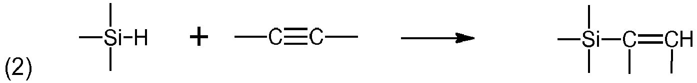

L'hydrosilylation de composés insaturés est réalisée par catalyse, à l'aide de catalyseur organométallique. Actuellement, le catalyseur organométallique approprié pour cette réaction est un catalyseur au platine. Ainsi, la plupart des réactions industrielles d'hydrosilylation sont catalysées par le complexe de platine de Karstedt, de formule générale Pt₂(divinyltétraméthyldisiloxane)₃ (ou en abrégé Pt₂(DVTMS)₃) :

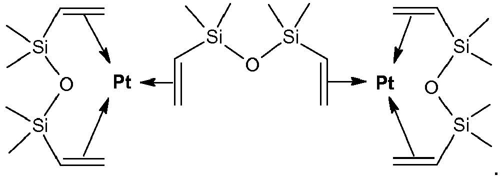

Au début des années 2000, la préparation de complexes de platine - carbène de formule générale : 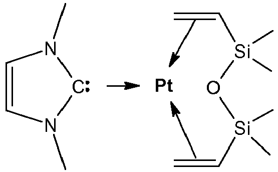 a permis d'avoir accès à des catalyseurs plus stables (voir par exemple la demande internationale de brevet WO 01/42258).

Toutefois, l'utilisation de catalyseurs organométalliques au platine est toujours problématique. Il s'agit d'un métal toxique, cher, en voie de raréfaction et dont le coût fluctue énormément. Son utilisation à l'échelle industrielle est donc difficile. On souhaite donc diminuer autant que possible la quantité de catalyseur nécessaire à la réaction, sans pour autant diminuer le rendement et la vitesse de la réaction. Par ailleurs, on souhaite disposer d'un catalyseur stable au cours de la réaction. Il a été constaté que, lors de la réaction catalysée, le platine métallique pouvait précipiter, ce qui a pour conséquence la formation de colloïdes insolubles dans le milieu réactionnel. Le catalyseur est alors moins actif. De plus, ces colloïdes forment un trouble dans le milieu réactionnel, et les produits obtenus ne sont pas satisfaisants esthétiquement car ils sont colorés.

Enfin, les complexes à base de platine catalysent les réactions d'hydrosilylation à température ambiante avec une cinétique rapide, de l'ordre de quelques minutes. Afin d'avoir le temps de préparer, transporter et mettre en oeuvre la composition avant son durcissement, il est souvent nécessaire d'inhiber temporairement la réaction d'hydrosilylation. Par exemple, lorsqu'on souhaite revêtir un substrat papier ou polymère d'un revêtement silicone anti-adhérent, la composition silicone est formulée pour former un bain qui doit rester liquide à température ambiante pendant plusieurs heures avant d'être déposée sur le substrat. Ce n'est qu'après ce dépôt que l'on souhaite que le durcissement par hydrosilylation se produise. L'introduction d'additifs inhibiteurs d'hydrosilylation permet d'empêcher efficacement la réaction aussi longtemps que nécessaire avant activation. Toutefois, il est parfois nécessaire d'utiliser de grandes quantités d'agent inhibiteur, ce qui provoque une forte inhibition du catalyseur d'hydrosilylation. Cela a pour conséquence que la vitesse de durcissement de la composition, même après activation, est ralentie, ce qui est un inconvénient important d'un point de vue industriel car cela oblige notamment à réduire la vitesse d'enduction et donc la cadence de production.

Il serait donc intéressant de proposer des catalyseurs organométalliques alternatifs aux catalyseurs à base de platine et de disposer de nouveaux matériaux siliconés réticulés et/ou durcis au moyen de catalyseurs ne présentant plus les problèmes décrits ci-dessus, en particulier ne nécessitant pas d'utiliser d'agent inhibiteur.

Cet objectif est atteint à l'aide d'un catalyseur qui est un complexe du nickel (II) présentant une structure spécifique. Ces catalyseurs, en particulier, ne nécessitent pas d'être manipulés sous atmosphère protectrice (par exemple sous argon). Les réactions de réticulation dans lesquelles ils sont mis en oeuvre peuvent également être opérées à l'air, sans atmosphère protectrice.

La présente invention a ainsi pour objet, selon un premier aspect, un matériau silicone réticulé **Y** obtenu par chauffage à une température allant de 70 à 200°C, de préférence de 80 à 150°C, et plus préférentiellement de 80 à 130°C, d'une composition **X** réticulable comprenant :
- au moins un composé organopolysiloxane **A** comportant, par molécule, au moins deux radicaux alcényles en C₂-C₆ liés à des atomes de silicium,
- au moins un composé organohydrogénopolysiloxane **B** comportant, par molécule, au moins deux atomes d'hydrogène liés à un atome de silicium identique ou différent,
- au moins un catalyseur **C** qui est un complexe répondant à la formule suivante:

   [Ni (L¹)₂]

   dans laquelle:
   - le symbole Ni représente le nickel au degré d'oxydation II,
   - les symboles L¹, identiques ou différents, représentent un ligand qui est un anion β-dicarbonylato ou l'anion énolate d'un composé β-dicarbonylé,
      - éventuellement au moins un promoteur d'adhérence **D** et
      - éventuellement au moins une charge **E.**

On entend par « matériau silicone réticulé » tout produit à base de silicone obtenu par réticulation et/ou durcissement de compositions comprenant des organopolysiloxanes possédant au moins deux liaisons insaturées et des organopolysiloxanes possédant au moins deux motifs hydrogénosilylés (≡SiH). Le matériau silicone réticulé peut par exemple être un élastomère, un gel ou une mousse.

L'invention a également pour objet, selon un second aspect, une composition **X** réticulable telle que décrite précédemment.

La composition **X** selon l'invention est réticulable, c'est-à-dire, au sens de la présente demande, qu'une fois que les composés A et B ont réagi entre eux en présence du catalyseur C, un réseau en trois dimensions se forme, ce qui conduit au durcissement de la composition. La réticulation implique donc un changement physique progressif du milieu constituant la composition.

Les publications Bogdan Marciniec et al. « Catalyst of hydrosililation Part XXV. Effect of nickel (o) and nickel (II) complex catalysts on dehydrogenative silylation, hydrosilylation and dimerization of vinyltriethoxysilane », Journal of Organometallic chemistry, vol. 484, n°1-2, 27 dec. 1994 et « Catalyst of hydrosililation Part XX. Unusual reaction of vinyltriethoxysilane with triethoxysilane catalyzed by nickel acetylacetonate », Journal of Organometallic chemistry, Lausane JOM, 15 oct. 1991, décrivent une réaction d'hydrosilylation entre deux silanes, le vinyltriéthoxysilane (EtO)₃-Si-Vi et le triéthoxysilane (EtO)₃-SiH, en présence de catalyseurs de nickel (0) ou (2). Les silanes comprenant la liaison Si-H ont comme substituants des motifs éthoxy Si-O-Et bien spécifiques et bien différent des siloxanes selon la présente demande qui présentent des substituants alkyle et siloxy.

L'invention a également pour objet, selon un troisième aspect, l'utilisation du catalyseur C précédemment décrit comme catalyseur de réticulation de compositions silicones.

L'invention a encore pour objet, selon un quatrième aspect, un procédé de réticulation de compositions silicones, caractérisé en ce qu'il consiste à chauffer la composition **X** précédemment décrite à une température allant de 70 à 200°C, de préférence de 80 à 150°C, et plus préférentiellement de 80 à 130°C, ainsi que le matériau silicone réticulé **Y** ainsi obtenu.

Suivant une modalité particulièrement avantageuse, l'organopolysiloxane **A** comportant, par molécule, au moins deux radicaux alcényles en C₂-C₆ liés à des atomes de silicium, comprend :
(i) au moins deux motifs siloxyles **(A.1)**, identiques ou différents, de formule suivante : 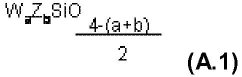 dans laquelle :
   - a= 1 ou 2, b= 0, 1 ou 2 et a+b= 1, 2 ou 3;
   - les symboles W, identiques ou différents, représentent un groupement alcényle linéaire ou ramifié en C₂-C₆,
   - et les symboles Z, identiques ou différents, représentent un groupe hydrocarboné monovalent ayant de 1 à 30 atomes de carbone, et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle,
(ii) et éventuellement au moins un motif siloxyle de formule suivante : 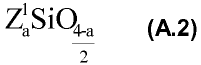 dans laquelle :
   - a= 0, 1, 2 ou 3,
   - les symboles Z¹, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone inclus et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

Avantageusement, les radicaux Z et Z¹ sont choisis parmi le groupe constitué par un radical méthyle et phényle, et W est choisis parmi la liste suivante : vinyle, propényle, 3-butènyle, 5-hexènyle, 9-décényle, 10-undécènyle, 5,9-décadiènyle et 6-11-dodécadiényle, et de préférence W est un vinyle.

Ces organopolysiloxanes peuvent présenter une structure linéaire, ramifiée, ou cyclique. Leur degré de polymérisation est, de préférence, compris entre 2 et 5000.

Lorsqu'il s'agit de polymères linéaires, ceux-ci sont essentiellement constitués de motifs siloxyles « D » choisis parmi le groupe constitué par les motifs siloxyles W₂SiO_{2/2}, WZSiO_{2/2} et Z¹₂SiO_{2/2}, et de motifs siloxyles « M » choisis parmi le groupe constitué par les motifs siloxyles W₃SiO_{1/2}, WZ₂SiO_{1/2}, W₂ZSiO_{1/2} et Z¹₃SiO_{1/2}. Les symboles W, Z et Z¹ sont tels que décrits ci-dessus.

A titre d'exemples de motifs « M » terminaux, on peut citer les groupes triméthylsiloxy, diméthylphénylsiloxy, diméthylvinylsiloxy ou diméthylhexènylsiloxy.

A titre d'exemples de motifs « D », on peut citer les groupes diméthylsiloxy, méthylphénylsiloxy, méthylvinylsiloxy, méthylbutènylsiloxy, méthylhexènylsiloxy, méthyldécènylsiloxy ou méthyldécadiènylsiloxy.

Lesdits organopolysiloxanes **A** peuvent être des huiles de viscosité dynamique de l'ordre de 10 à 100000 mPa.s à 25°C, généralement de l'ordre de 10 à 70000 mPa.s à 25°C, ou des gommes présentant une masse moléculaire de l'ordre de 1 000 000 mPa.s ou plus à 25°C.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Lorsqu'il s'agit d'organopolysiloxanes cycliques, ceux-ci sont constitués de motifs siloxyles «D» de formules suivantes : W₂SiO_{2/2}, Z₂SiO_{2/2} ou WZSiO_{2/2}, qui peuvent être du type dialkylsiloxy, alkylarylsiloxy, alkylvinylsiloxy, alkylsiloxy. Des exemples de tels motifs siloxyles ont déjà été cités ci-dessus. Lesdits organopolysiloxanes **A** cycliques présentent une viscosité de l'ordre de 10 à 5000 mPa.s à 25°C.

Selon un mode préféré de réalisation, la composition **X** selon l'invention comprend un second composé organopolysiloxane comportant, par molécule, au moins deux radicaux alcényles en C₂-C₆ liés à des atomes de silicium, différent du composé organopolysiloxane **A**, ledit second composé organopolysiloxane étant de préférence le divinyltétraméthylsiloxane (dvtms).

De préférence, le composé organopolysiloxane A a une teneur massique en motif Sivinyle comprise entre 0,001 et 30%, de préférence entre 0,01 et 10%.

Selon un mode de réalisation préféré, le composé organohydrogénopolysiloxane **B** est un organopolysiloxane ayant au moins deux atomes d'hydrogène, par molécule, liés à un atome de silicium identique ou différent et, de préférence, ayant au moins trois atomes d'hydrogène par molécule directement liés à un atome de silicium identique ou différent.

Avantageusement, le composé organohydrogénopolysiloxane **B** est un organopolysiloxane comprenant :
(i) au moins deux motifs siloxyles et, de préférence, au moins trois motifs siloxyles de formule suivante: 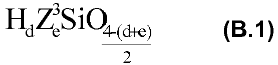 dans laquelle:
   - d= 1 ou 2, e = 0, 1 ou 2 et d+e= 1, 2 ou 3,
   - les symboles Z³, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle, et
(ii) éventuellement au moins un motif siloxyle de formule suivante : 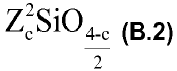 dans laquelle :
   - c= 0, 1, 2 ou 3,
   - les symboles Z², identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

Le composé organohydrogénopolysiloxane **B** peut être uniquement formé de motifs siloxyle de formule **(B.1)** ou comporter en plus des motifs de formule **(B.2).** Il peut présenter une structure linéaire, ramifiée, ou cyclique. Le degré de polymérisation est de préférence supérieur ou égal à 2. Plus généralement, il est inférieur à 5000.

Des exemples de motifs siloxyles de formule **(B.1)** sont notamment les motifs suivants :H(CH₃)₂SiO_{1/2}, HCH₃SiO_{2/2} et H(C₆H₅)SiO_{2/2}.-

Lorsqu'il s'agit de polymères linéaires, ceux-ci sont essentiellement constitués :
- de motifs siloxyles « D » choisis parmi les motifs de formules suivantes Z²₂SiO_{2/2} ou Z³HSiO_{2/2}, et
- de motifs siloxyles « M » choisis parmi les motifs de formules suivantes Z²₃SiO_{1/2} ou Z³₂HSiO_{1/2}.

Ces organopolysiloxanes linéaires peuvent être des huiles de viscosité dynamique à de l'ordre de 1 à 100 000 mPa.s à 25°C, généralement de l'ordre de 10 à 5000 mPa.s à 25°C, ou des gommes présentant une masse moléculaire de l'ordre de 1 000 000 mPa.s ou plus à 25°C.

Lorsqu'il s'agit d'organopolysiloxanes cycliques, ceux-ci sont constitués de motifs siloxyles « D » de formules suivantes Z²₂SiO_{2/2} et Z³HSiO_{2/2}, qui peuvent être du type dialkylsiloxy ou alkylarylsiloxy ou de motifs Z³HSiO_{2/2} uniquement. Ils présentent alors une viscosité de l'ordre de 1 à 5000 mPa.s.

Des exemples de composé organohydrogénopolysiloxane linéaire B sont : les diméthylpolysiloxanes à extrémités hydrogénodiméthylsilyles, les diméthylhydrogénométhylpolysiloxanes à extrémités triméthylsilyles, les diméthylhydrogénométhylpolysiloxanes à extrémités hydrogénodiméthylsilyles, les hydrogénométhylpolysiloxanes à extrémités triméthylsilyles, et les hydrogénométhylpolysiloxanes cycliques.

Sont notamment préférés à titre de composé organohydrogénopolysiloxane **B**, les oligomères et polymères répondant à la formule générale **(B.3)** : 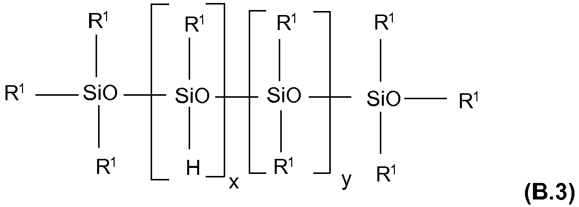 dans laquelle :
- x et y sont un nombre entier variant entre 0 et 200,
- les symboles R¹, identiques ou différents, représentent indépendamment les uns des autres :
   - un radical alkyle linéaire ou ramifié contenant 1 à 8 atomes de carbone, éventuellement substitué par au moins un halogène, de préférence le fluor, les radicaux alkyle étant, de préférence, méthyle, éthyle, propyle, octyle et 3,3,3-trifluoropropyle,
   - un radical cycloalkyle contenant entre 5 et 8 atomes de carbone cycliques,
   - un radical aryle contenant entre 6 et 12 atomes de carbone, ou
   - un radical aralkyle ayant une partie alkyle contenant entre 5 et 14 atomes de carbone et une partie aryle contenant entre 6 et 12 atomes de carbone.

Conviennent particulièrement à l'invention à titre de composé organohydrogénopolysiloxane **B** les composés suivants : 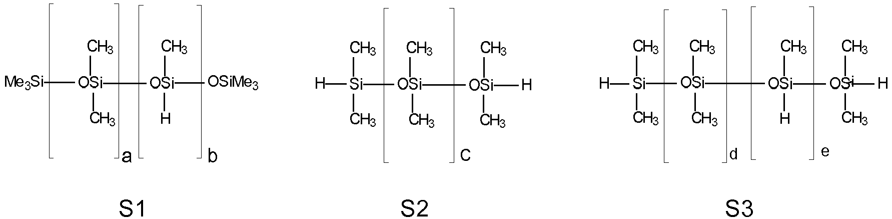 avec a, b, c, d et e définis ci-dessous :
- dans le polymère de formule S1 :
   - 0 ≤ a ≤ 150, de préférence 0 ≤ a ≤ 100, et plus particulièrement 0 ≤ a ≤ 20, et
   - 1 ≤ b ≤ 90 de préférence 10 ≤ b ≤ 80 et plus particulièrement 30 ≤ b ≤ 70,
- dans le polymère de formule S2 : 0 ≤ c ≤ 15
- dans le polymère de formule S3 : 5 ≤ d ≤ 200, de préférence 20 ≤ d ≤ 100, et 2 ≤ e ≤ 90, de préférence 10 ≤ e ≤ 70.

En particulier, le composé organohydrogénopolysiloxane **B** convenant à l'invention est le composé de formule S1, où a=0.

De préférence le composé organohydrogénopolysiloxane **B** a une teneur massique en motif SiH comprise entre 0,2 et 91%, de préférence entre 0,2 et 50%.

Dans le cadre de l'invention, les proportions de l'organopolysiloxane **A** et de l'organohydrogénopolysiloxane **B** sont telles que le rapport molaire des atomes d'hydrogène liés au silicium (Si-H) dans l'organohydrogénopolysiloxane **B** sur les radicaux alcényles liés au silicium (Si-CH=CH₂) dans l'organopolysiloxane **A** est compris entre 0,2 et 20,de préférence entre 0,5 et 15, plus préférentiellement entre 0,5 et 10 et encore plus préférentiellement entre 0,5 et 5.

Pour permettre l'obtention du matériau **Y** selon l'invention, la composition **X** met en oeuvre au moins un catalyseur **C** qui est un complexe répondant à la formule suivante:

[Ni (L¹)₂]

dans laquelle:
- le symbole Ni représente le nickel au degré d'oxydation II,
- les symboles L¹, identiques ou différents, représentent un ligand qui est un anion β-dicarbonylato ou l'anion énolate d'un composé β-dicarbonylé.

Il est à noter qu'au moins une partie du caractère inventif de l'invention, tient à la sélection judicieuse et avantageuse de la structure du catalyseur **C.**

Selon une autre disposition préférée de réalisation de l'invention, le ligand L₁ est un anion dérivé d'un composé de formule (1) :

R¹COCHR²COR³ **(1)**

dans laquelle :
- R¹ et R³, identiques ou différents, représentent un radical hydrocarboné en C₁-C₃₀ linéaire, cyclique ou ramifié, un aryle contenant entre 6 et 12 atomes de carbone, ou un radical -OR⁴ avec R⁴ qui représente un radical hydrocarboné en C₁-C₃₀ linéaire, cyclique ou ramifié,
- R² est un atome d'hydrogène ou un radical hydrocarboné, de préférence alkyle, comprenant de 1 à 4 atomes de carbone ; avec
- R¹ et R² peuvent être reliés pour former un cycle en C₅-C₆, et
- R² et R⁴ peuvent être reliés pour former un cycle en C₅-C₆.

Avantageusement, le composé de formule **(1)** est choisi parmi le groupe constitué par les β-dicétones: 2,4-pentanedione (acac); l'hexanedione-2,4; heptanedione-2,4; heptanedione-3,5; l'éthyl-3 pentanedione-2,4; méthyl-5 hexanedione-2,4; octanedione-2,4; octanedione-3,5; diméthyl-5,5 hexanedione-2,4; méthyl-6 heptanedione-2,4; diméthyl-2, 2 nonanedione-3,5; diméthyl-2,6 heptanedione-3,5; 2-acétylcyclohexanone (Cy-acac); 2,2,6,6-tétraméthyl-3,5-heptanedione (*TMHD*); 1,1,1,5,5,5-hexafluoro-2,4-pentanedione *(F-acac)];* benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; benzoylstéaroylméthane; benzoylpalmitoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane, et de préférence parmi les β-dicétones 2,4-pentanedione (acac) et 2,2,6,6-tétraméthyl-3,5-heptanedione (*TMHD*)*.*

Selon une autre disposition préférée de réalisation de l'invention, le ligand β-dicarbonylato L₁ est un anion β-cétoestérato choisi parmi le groupe constitué par les anions dérivés des composés suivants: les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique ou ceux décrit dans la demande de brevet FR-A-1435882.

Selon un mode particulièrement préféré de réalisation, le catalyseur **C** est choisi parmi les complexes [Ni(acac)₂], [Ni(TMHD)₂], [Ni(cétoester)₂] et [Ni(Rhodiastab 50)₂]. Il est entendu que dans les formules ci-dessus « acac » signifie l'anion dérivé du composé 2,4-pentanedione, « THMD » signifie l'anion dérivé du composé 2,2,6,6-tétraméthyl-3,5-heptanedione, « cétoester » signifie l'anion dérivé d'un ester méthylique de l'acide acétylacétique et « Rhodiastab 50 » signifie un mélange d'anions dérivés du composé benzoylstéaroylméthane, et d'anions dérivés du composé benzoylpalmitoylméthane.

Le catalyseur **C** peut notamment être présent dans la composition **X** selon l'invention en une teneur allant de 0,001 à 10% molaire de nickel par nombre de moles de radicaux alcényles en C₂-C₆ liés à des atomes de silicium du composé organopolysiloxane **A**, de préférence de 0,01 à 7%, et plus préférentiellement de 0,1 à 5%.

La composition **X** mise en oeuvre pour obtenir le matériau **Y** selon l'invention est de préférence exempte de catalyseur à base de platine, de palladium, de ruthénium ou de rhodium. Par « exempte » de catalyseur autre que le catalyseur **C**, on entend que la composition **X** selon l'invention comprend moins de 0,1% en poids de catalyseur autre que le catalyseur **C**, de préférence moins de 0,01% en poids, et plus préférentiellement moins de 0,001% en poids, par rapport au poids total de la composition.

La composition **X** peut avantageusement comprendre au moins un promoteur d'adhérence **D**.

Sans que cela ne soit limitatif, il peut être considéré que le promoteur d'adhérence **D** comporte:
- (D.1) au moins un organosilane alcoxylé contenant, par molécule, au moins un groupe alcényle en C₂-C₆, ou
- (D.2) au moins un composé organosilicié comprenant au moins un radical époxy, ou
- (D.3) au moins un chélate de métal M et/ou un alcoxyde métallique de formule générale : M(OJ)n, avec n = valence de M et J = alkyle linéaire ou ramifié en C₁-C₈,
M étant choisi dans le groupe formé par : Ti, Zr, Ge, Li, Mn, Fe, Al et Mg ou leurs mélanges

Conformément à une disposition préférée de l'invention, l'organosilane alcoxylé (D.1) du promoteur d'adhérence **D** est sélectionné parmi les produits de formule générale suivante: 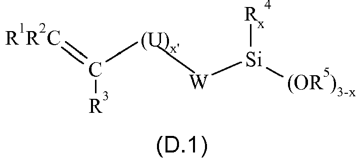 formule dans laquelle :
- R1, R2, R3 sont des radicaux hydrogénés ou hydrocarbonés identiques ou différents entre eux et représentent un atome d'hydrogène, un alkyle linéaire ou ramifié en C₁-C₄ ou un phényle éventuellement substitué par au moins un alkyle en C₁-C₃,
- U est un alkylène linéaire ou ramifié en C₁-C₄,
- W est un lien valentiel,
- R⁴ et R⁵ sont des radicaux identiques ou différents et représentent un alkyle en C₁-C₄ linéaire ou ramifié,
- x' = 0 ou 1, et
- x = 0 à 2.

Sans que cela soit limitatif, il peut être considéré que le vinyltriméthoxysilane est un composé (D.1) particulièrement approprié.

S'agissant du composé organosilicié (D.2), il est prévu conformément à l'invention, de le choisir:
a) soit parmi les produits (D.2a) répondant à la formule générale suivante : 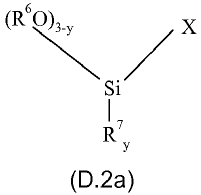 formule dans laquelle :
   - R⁶ est un radical alkyle linéaire ou ramifié en C₁-C₄,
   - R⁷ est un radical alkyle linéaire ou ramifié,
   - y est égal à 0, 1, 2 ou 3, et
   - X étant défini par la formule suivante : 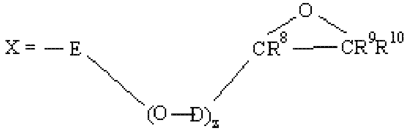 avec :
      - E et D qui sont des radicaux identiques ou différents choisis parmi les alkyles en C₁-C₄ linéaires ou ramifiés,
      - z qui est égal à 0 ou 1,
      - R⁸, R⁹, R¹⁰ qui sont des radicaux identiques ou différents représentant un atome d'hydrogène ou un alkyle linéaire ou ramifié en C₁-C₄, et
      - R⁸ et R⁹ ou R¹⁰ pouvant alternativement constituer ensemble et avec les deux carbones porteurs de l'époxy, un cycle alkyle ayant de 5 à 7 chaînons, ou
b) soit parmi les produits (D.2b) constitués par des polydiorganosiloxanes époxyfonctionnels comportant :
   (i) au moins un motif siloxyle de formule : 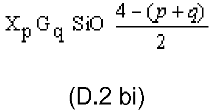 formule dans laquelle :
      - X est le radical tel que défini ci-dessus pour la formule (D.2 a)
      - G est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles contenant entre 6 et 12 atomes de carbone,
      - p = 1 ou 2,
      - q = 0, 1 ou 2,
      - p + q = 1, 2 ou 3. et
      et (ii) éventuellement au moins un motif siloxyle de formule : 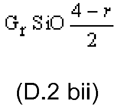 formule dans laquelle G a la même signification que ci-dessus et r est égale à 0, 1, 2 ou 3.

En ce qui concerne le dernier composé (D.3) du promoteur d'adhérence **D**, les produits préférés sont ceux dont le métal M du chélate et/ou de l'alcoxyde (D.3) est choisi dans la liste suivante : Ti, Zr, Ge, Li ou Mn. Il est à souligner que le titane est plus particulièrement préféré. On peut lui associer, par exemple, un radical alkoxy de type butoxy.

Le promoteur d'adhérence **D** pourra être formé de :
- (D.1) seul
- (D.2) seul
- (D.1) + (D.2)

Ou selon deux modalités préférées de :
- (D.1) + (D.3)
- (D.2) + (D.3)
et enfin selon la modalité la plus préférée : (D.1) + (D.2) + (D.3).

Selon l'invention, une combinaison avantageuse pour former le promoteur d'adhérence est la suivante :
- vinyltriméthoxysilane (VTMO), 3-glycidoxypropyltriméthoxysilane (GLYMO) et titanate de butyle.

Sur le plan quantitatif, il peut être précisé que les proportions pondérales entre (D.1), (D.2) et (D.3), exprimées en pourcentages en poids par rapport au total des trois, sont les suivantes :
- (D.1) ≥ 10, de préférence compris entre 15 et 70 et plus préférentiellement encore entre 25 à 65,
- (D.2) ≤ 90, de préférence compris entre 70 et 15 et plus préférentiellement encore entre 65 à 25, et
- (D.3) ≥ 1, de préférence compris entre 5 et 25 et plus préférentiellement encore entre 8 à 18,
étant entendu que la somme de ces proportions en (D.1), (D.2) et (D.3) est égale à 100%.

Pour de meilleures propriétés d'adhésion, le ratio pondéral (D.2) : (D.1) est de préférence compris entre 2 : 1 et 0,5 : 1, le ratio 1 : 1 étant plus particulièrement préféré.

Avantageusement, le promoteur d'adhérence **D** est présent à raison de 0,1 à 10% en poids, de préférence 0,5 à 5% en poids, et plus préférentiellement de 1 à 3 % en poids, par rapport au poids total de l'ensemble des constituants de la composition **X**.

Selon un mode particulier de réalisation, la composition **X** mise en oeuvre pour obtenir le matériau **Y** selon l'invention comprend également au moins une charge **E**.

Les charges **E** éventuellement contenues dans les compositions selon l'invention sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 µm (micromètres) et une surface spécifique BET supérieure à 30 m2/g, de préférence comprise entre 30 et 350 m2/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 µm (micromètres) et une surface BET inférieure à 100 m2/g. De façon pratique mais non limitative, les charges employées peuvent être un mélange de quartz et de silice. Les charges peuvent être traitées par tout produit approprié. Sur le plan pondéral, on préfère mettre en oeuvre une quantité de charge comprise entre 1% et 50% en poids, de préférence entre 1% et 40% en poids par rapport à l'ensemble des constituants de la composition.

L'invention a ainsi également pour objet, dans le cadre de la présente demande, une composition **X** réticulable comprenant :
- au moins un composé organopolysiloxane **A** comportant, par molécule, au moins deux radicaux alcényles en C₂-C₆ liés à des atomes de silicium,
- au moins un composé organohydrogénopolysiloxane **B** comportant, par molécule, au moins deux atomes d'hydrogène liés à un atome de silicium identique ou différent,
- au moins un catalyseur **C** qui est un complexe répondant à la formule suivante:

   [Ni (L¹)₂]

   dans laquelle:
   - le symbole Ni représente le nickel au degré d'oxydation II,
   - les symboles L¹, identiques ou différents, représentent un ligand qui est un anion β-dicarbonylato ou l'anion énolate d'un composé β-dicarbonylé,
      - éventuellement au moins un promoteur d'adhérence **D** et
      - éventuellement au moins une charge **E**.

La composition **X** selon l'invention peut en outre comprendre un ou plusieurs additifs fonctionnels usuels. Comme familles d'additifs fonctionnels usuels, on peut citer :
- les résines silicone,
- les modulateurs d'adhérence,
- les additifs pour augmenter la consistance,
- les pigments, et
- les additifs de tenue thermique, de tenue aux huiles ou de tenue au feu, par exemple les oxydes métalliques.

Les résines silicone sont des oligomères ou polymères organopolysiloxanes ramifiés bien connus et disponibles dans le commerce. Elles présentent, dans leur structure, au moins deux motifs différents choisis parmi ceux de formule R₃SiO_{1/2} (motif M), R₂SiO_{2/2} (motif D), RSiO₃₂(motif T) et SiO_{4/2} (motif Q), l'un au moins de ces motifs étant un motif T ou Q.

Les radicaux R sont identiques ou différents et sont choisis parmi les radicaux alkyles linéaires ou ramifiés en C1 - C6, hydroxyle, phényle, trifluoro-3,3,3 propyle. On peut citer par exemple comme radicaux alkyles, les radicaux méthyle, éthyle, isopropyle, tertiobutyle et n-hexyle.

Comme exemples d'oligomères ou de polymères organopolysiloxanes ramifiés, on peut citer les résines MQ, les résines MDQ, les résines TD et les résines MDT, les fonctions hydroxyles pouvant être portées par les motifs M, D et/ou T. Comme exemple de résines qui conviennent particulièrement bien, on peut citer les résines MDQ hydroxylées ayant une teneur pondérale en groupe hydroxyle comprise entre 0,2 et 10 % en poids.

Les matériaux **Y** selon l'invention peuvent notamment être obtenus en introduisant en premier lieu le catalyseur **C** dans le milieu réactionnel, puis en ajoutant l'organopolysiloxane A sous agitation. Enfin, le composé organohydrogénopolysiloxane B est introduit et la température du mélange est augmentée pour atteindre la température de réticulation. Le mélange est maintenu à la température de réticulation jusqu'à l'arrêt de l'agitation dû à une augmentation de la viscosité du mélange.

La présente invention a également pour objet un procédé de réticulation de compositions silicones, caractérisé en ce qu'il consiste à chauffer la composition **X** telle que définie précédemment à une température allant de 70 à 200°C, de préférence de 80 à 150°C, et plus préférentiellement de 80 à 130°C.

La composition **X** mise en oeuvre pour obtenir le matériau **Y** selon l'invention présente l'avantage de ne pas être sensible à l'air et de pouvoir ainsi être mise en oeuvre et notamment réticuler sous atmosphère non inerte, et en particulier à l'air.

La présente invention est illustrée plus en détails dans les exemples de réalisation non limitatifs.

### EXEMPLE 1 : catalyseurs à base de nickel pour la réticulation de divinyltétraméthylsiloxane (dvtms) avec MD'₅₀M

### I) Constituants

1) Organopolysiloxane **A** : divinyltétraméthylsiloxane (dvtms) (1,073 mole de radicaux vinyle liés au silicium pour 100g d'huile)
2) Organohydrogénopolysiloxane **B** de formule : MD'₅₀M (1,58 mole d'atomes d'hydrogène liés au silicium pour 100g d'huile), avec : M: (CH₃)₃SiO_{1/2;} et D': (CH₃)HSiO_{2/2}
3) Catalyseurs **(A)**, **(B)**, **(C)**, **(D)**, **(E)** et **(F)** :

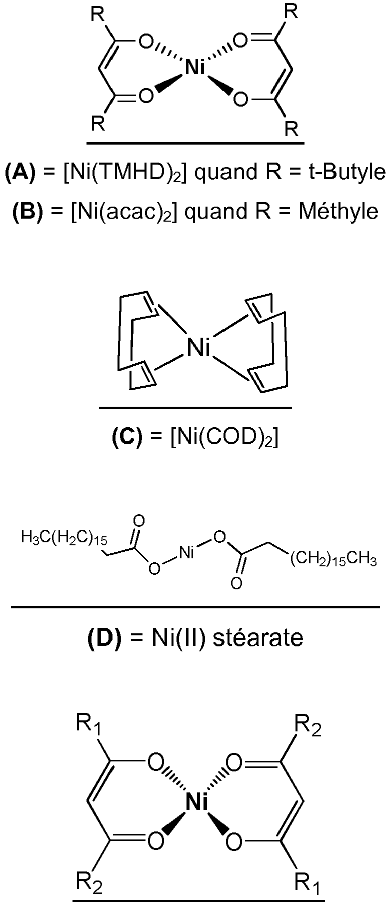

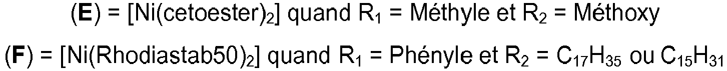

Les catalyseurs (A), (B), (C) et (D) sont disponibles commercialement, par exemple sous les références Strem pureté >95% pour le composé [Ni(acac)₂], Strem pureté >98% pour le composé [Ni(TMHD)₂].

Le catalyseur (E) est obtenu par une synthèse bien connue de l'homme du métier :

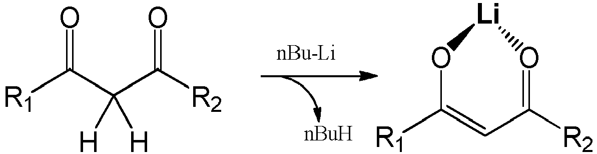

Le composé cétoester avec R₁ = Méthyle et R² = Méthoxy (fournisseur : Sigma-Aldrich) est dans un premier temps déprotoné à l'aide d'un équivalent de Bu-Li (fournisseur : Sigma-Aldrich) à basse température (-78°C). Le sel obtenu est recristallisé dans le diéthyléther. Le ligand déprotoné obtenu (sel de lithium) est additionné sur un chlorure de nickel (NiCl₂) en solution dans le THF à température ambiante (12 h). Après décantation, filtration et concentration, le complexe est recristallisé dans le THF.

Le complexe [Ni(cetoester)₂] se présente sous la forme d'un solide vert pomme.

Le catalyseur (F) est également obtenu par une synthèse bien connue de l'homme du métier :

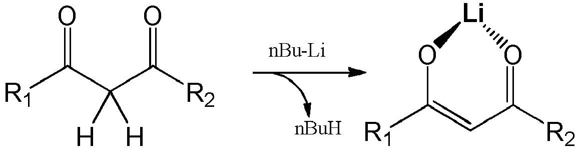

Le composé dicétone avec R₁ = Phényle et R² = C₁₇H₃₅ ou C₁₅H₃₁ (fournisseur : Solvay) est dans un premier temps déprotoné à l'aide d'un équivalent de Bu-Li (Fournisseur : Sigma-Aldrich) à basse température (-78°C). Le sel obtenu est recristallisé dans le diéthyléther. Le ligand déprotoné obtenu (sel de lithium) est additionné sur un chlorure de nickel (NiCl₂) en solution dans le THF à température ambiante (12 h). Le complexe obtenu est visqueux, de coloration verte. Une étape de recristallisation permet de conduire à l'obtention d'un solide.

### II) Formulations et résultats:

Pour chaque formulation testée, le catalyseur est pesé et introduit dans un Schlenk à température ambiante et sous atmosphère inerte lorsque le complexe est sensible à l'air (Cas notamment du Ni(0)), ou dans un flacon de verre lorsque les complexes sont stables à l'air.

On a ensuite introduit 1,87g de divinyltétraméthylsiloxane (dvtms) puis 1,27g d'huile MD'₅₀M. Le flacon (ou Schlenk) est placé sous agitation dans un bain d'huile qui sera chauffé à la température de réaction souhaitée.

Le ratio R correspond au rapport molaire des atomes d'hydrogène liés au silicium (Si-H) dans l'organohydrogénopolysiloxane (MD'₅₀M) sur les radicaux alcényles (ici vinyles) liés au silicium (Si-CH=CH₂) dans l'organopolysiloxane (dvtms).

Le début de réticulation est mesuré. Le début de réticulation est défini comme étant l'arrêt de l'agitation dû à une augmentation de la viscosité du milieu.

**Tableau 1 :**

| | Catalyseur | Température de réaction | %mol de catalyseur⁽¹⁾ | Ratio R | Atmosphère | Début de réticulation |
|---|---|---|---|---|---|---|
| Formulation **1** (comparatif) | [Ni(COD)₂] | 110°C | 0,25% | 1:1 | Inerte (sous argon) | 3h20 |
| Formulation **2** (invention) | [Ni(TMHD)₂] | 110°C | 0,25% | 1:1 | Non inerte | 1h |
| Formulation **3** (comparatif) | Ni(II) stéarate | 110°C | 0,25% | 1:1 | Non inerte | 45h |
| Formulation **4** (invention) | [Ni(acac)₂] | 110°C | 0,25% | 1:1 | Non inerte | 2h |

| | | | | | | |
|---|---|---|---|---|---|---|
| (1) Exprimé en % molaire de nickel par nombre de moles de radicaux vinyles liés au silicium (Si-CH=CH₂) dans dvtms | | | | | | |

La formulation **1** comparative comprenant un complexe de Ni(0) réticule au bout de 3h20 mais doit être maintenue sous atmosphère inerte. En effet, sous atmosphère non inerte, le complexe se dégrade très rapidement, avant même le début de la réaction, lors de la montée en température.

Les formulations **2** et **4** selon l'invention où le catalyseur est un complexe de Ni(II) présentant deux ligands β-dicarbonylés réticulent en 1 à 2h.

La formulation **3** comparative, mettant en oeuvre un complexe de Ni(II) présentant des ligands stéarates, ne réticule qu'après 45h.

On a par ailleurs testé les catalyseurs de nickel selon l'invention dans les différentes conditions opératoires suivantes :

**Tableau 2 :**

| | Catalyseur | Température de réaction | %mol de catalyseur (1) | Ratio R | Atmosphère | Début de réticulation |
|---|---|---|---|---|---|---|
| Formulation **5** (invention) | [Ni(TMHD)₂] | 90°C | 0,25% | 1:1 | Non inerte | Moins de 15h |
| Formulation **6** (invention) | [Ni(acac)₂] | 90°C | 0,25% | 1 :1 | Non inerte | Moins de 15h |
| Formulation **7** (invention) | [Ni(TMHD)₂] | 110°C | 0,125% | 1:1 | Non inerte | Moins de 15h |
| Formulation **8** (invention) | [Ni(acac)₂] | 110°C | 0,125% | 1:1 | Non inerte | Moins de 15h |
| Formulation **9** (invention) | [Ni(cetoester)₂] | 90°C | 0,25% | 1:1 | Non inerte | 3,5 h |
| Formulation **10** (invention) | [Ni(cetoester)₂] | 90°C | 0,125% | 1:1 | Non inerte | Moins de 15h |

| | | | | | | |
|---|---|---|---|---|---|---|
| (1) Exprimé en % molaire de nickel par nombre de moles de radicaux vinyles liés au silicium (Si-CH=CH₂) dans dvtms | | | | | | |

Les formulations **5** et **6** selon l'invention montrent qu'une réticulation est obtenue dès 90°C, même si cette réticulation est plus lente que celle observée pour les formulations **2** et **4** opérées à 110°C.

Les formulations **7**, **8** et **10** selon l'invention montrent qu'une réticulation est obtenue dès 0,125% molaire de catalyseur, même si cette réticulation est plus lente que celle observée pour les formulations **2**, **4** et **9** comprenant 0,25% molaire de catalyseur.

### EXEMPLE 2 : catalyseurs à base de nickel pour la réticulation de M^{vi} D₇₀ M^{vi} avec MD'₅₀M

### I) Constituants

1) Organopolysiloxane **A** de formule M^{vi}D₇₀M^{vi} (0,038 mole de radicaux vinyle liés au silicium pour 100g d'huile), avec : Vi= Vinyle ; M^{vi}: (CH₃)₂ViSiO_{1/2} et D: (CH₃)₂SiO_{2/2}
2) Organohydrogénopolysiloxane **B** de formule: MD'₅₀M (1,58mole d'atomes d'hydrogène liés au silicium pour 100g d'huile), avec : M: (CH₃)₃SiO_{1/2;} et D': (CH₃)HSiO_{2/2}
3) Catalyseurs **(A)**, **(B)**, **(C)**, **(D)**, **(E)** et **(F)** tels que définis dans l'exemple 1.

### II) Formulations et résultats:

Pour chaque formulation testée, le catalyseur est pesé et introduit dans un Schlenk à température ambiante et sous atmosphère inerte lorsque le complexe est sensible à l'air (cas du Ni(0)), ou dans un flacon de verre lorsque les complexes sont stables à l'air.

On a ensuite introduit l'huile M^{vi}D₇₀M^{vi} puis l'huile MD'₅₀M.

Pour un ratio R correspondant au rapport molaire des atomes d'hydrogène liés au silicium (Si-H) dans l'organohydrogénopolysiloxane (MD'₅₀M) sur les radicaux alcényles (ici vinyles) liés au silicium (Si-CH=CH₂) dans l'organopolysiloxane (M^{vi}D₇₀M^{vi}) de 1 :1, on introduit 4,39g d'huile M^{vi}D₇₀M^{vi} puis 0,105g d'huile MD'₅₀M.

On ajuste les teneurs en huile M^{vi}D₇₀M^{vi} et en huile MD'₅₀M selon le ratio R souhaité.

Le flacon (ou Schlenk) est placé sous agitation dans un bain d'huile qui sera chauffé à la température de réaction souhaitée.

Le ratio R correspond au rapport molaire des atomes d'hydrogène liés au silicium (Si-H) dans l'organohydrogénopolysiloxane (MD'₅₀M) sur les radicaux alcényles (ici vinyles) liés au silicium (Si-CH=CH₂) dans l'organopolysiloxane (M^{vi} D₇₀ M^{vi}).

Le début de réticulation est mesuré.

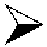 ***Etude de la durée de réticulation***

**Tableau 3 :**

| | Catalyseur | Température de réaction | %mol de catalyseur⁽¹⁾ | Ratio R | Atmosphère | Début de réticulation |
|---|---|---|---|---|---|---|
| Formulation **11** (comparatif) | [Ni(COD)₂] | 110°C | 4% | 1:1 | Inerte (sous argon) | 2h50 |
| Formulation **12** (invention) | [Ni(TMHD)₂] | 110°C | 4% | 1:1 | Non inerte | 1h50 |
| Formulation **13** (comparatif) | Ni(II) stéarate | 110°C | 4% | 1:1 | Non inerte | Pas de réticulation à 48h |
| Formulation **14** (invention) | [Ni(acac)₂] | 110°C | 4% | 1:1 | Non inerte | 2h20 |

| | | | | | | |
|---|---|---|---|---|---|---|
| (1) Exprimé en % molaire de nickel par nombre de moles de radicaux vinyles liés au silicium (Si-CH-CH₂) dans l'organopolysiloxane (M^{vi}D₇₀M^{vi}) | | | | | | |

La formulation **11** comprenant un complexe de Ni(0) réticule au bout de 2h50 mais doit être maintenue sous atmosphère inerte. En effet, comme déjà indiqué dans l'exemple 1, le complexe se dégrade très rapidement sous atmosphère non inerte, avant même le début de la réaction.

Les formulations **12** et **14** selon l'invention où le catalyseur est un complexe de Ni(II) présentant deux ligands β-dicarbonylés réticulent au bout d'environ 1h50 à 2h20.

La formulation **13** comparative, mettant en oeuvre un complexe de Ni(II) présentant des ligands stéarates, ne réticule toujours pas après 48h.

On a par ailleurs testé les catalyseurs **(E)** et **(F)** selon l'invention dans les différentes conditions opératoires suivantes :

**Tableau 4 :**

| | Catalyseur | Température de réaction | %mol de catalyseur⁽¹⁾ | Ratio R | Début de réticulation |
|---|---|---|---|---|---|
| Formulation **15** (invention) | [Ni(cetoester)₂] | 110°C | 2% | 1:1 | 5h |
| Formulation **16** (invention) | [Ni(cetoester)₂] | 110°C | 1,6% | 1,6:1 | 30min |
| Formulation **17** (invention) | Ni(Rhodiastab)₂ | 110°C | 0,8% | 1,6:1 | 3h |

| | | | | | |
|---|---|---|---|---|---|
| (1) Exprimé en % molaire de nickel par nombre de moles de radicaux vinyles liés au silicium (Si-CH-CH₂) dans l'organopolysiloxane (M^{vi}D₇₀M^{vi}) | | | | | |

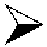 ***Etude de l'effet de la température***

**Tableau 5 : Effet de l'augmentation de température (1)**

| | Catalyseur | Température de réaction | %mol de catalyseur (1) | Ratio R | Atmosphère | Début de réticulation |
|---|---|---|---|---|---|---|
| Formulation **18** (invention) | [Ni(TMHD)₂] | 90°C | 2% | 1:1 | Non inerte | 17h |
| Formulation **19** (invention) | [Ni(TMHD)₂] | 110°C | 2% | 1:1 | Non inerte | 2h20 |
| Formulation **20** (invention) | [Ni(TMHD)₂] | 130°C | 2% | 1:1 | Non inerte | 10min |

| | | | | | | |
|---|---|---|---|---|---|---|
| ⁽¹⁾Exprimé en % molaire de nickel par nombre de moles de radicaux vinyles liés au silicium (Si-CH-CH₂) dans l'organopolysiloxane (M^{vi}D₇₀M^{vi}) | | | | | | |

**Tableau 6 : Effet de l'augmentation de température (2)**

| | Catalyseur | Température de réaction | %mol de catalyseur⁽¹⁾ | Ratio R | Atmosphère | Début de réticulation |
|---|---|---|---|---|---|---|
| Formulation **21** (invention) | [Ni(acac)₂] | 90°C | 1,6% | 3,1 :1 | Non inerte | 3h |
| Formulation **22** (invention) | [Ni(acac)₂] | 110°C | 1,6% | 3,1 :1 | Non inerte | 20 min |
| Formulation **23** (invention) | [Ni(acac)₂] | 130°C | 1,6% | 3,1 :1 | Non inerte | 8 min |

| | | | | | | |
|---|---|---|---|---|---|---|
| ⁽¹⁾Exprimé en % molaire de nickel par nombre de moles de radicaux vinyles liés au silicium (Si-CH-CH₂) dans l'organopolysiloxane (M^{vi}D₇₀M^{vi}) | | | | | | |

Les formulations **18** à **23** selon l'invention montrent que l'augmentation de la température permet de diminuer significativement le temps de réticulation.

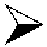 ***Etude de l'effet de la concentration en catalyseur***

**Tableau 7 : effet de l'augmentation de la concentration en catalyseur (1)**

| | Catalyseur | Température de réaction | %mol de catalyseur (1) | Ratio R | Atmosphère | Début de réticulation |
|---|---|---|---|---|---|---|
| Formulation **24** (invention) | [Ni(TMHD)₂] | 110°C | 1% | 1:1 | Non inerte | 26h |
| Formulation **19** (invention) | [Ni(TMHD)₂] | 110°C | 2% | 1:1 | Non inerte | 2h20 |
| Formulation **12** (invention) | [Ni(TMHD)₂] | 110°C | 4% | 1:1 | Non inerte | 1h50 |

| | | | | | | |
|---|---|---|---|---|---|---|
| ⁽¹⁾Exprimé en % molaire de nickel par nombre de moles de radicaux vinyles liés au silicium (Si-CH-CH₂) dans l'organopolysiloxane (M^{vi}D₇₀M^{vi}) | | | | | | |

**Tableau 8 : effet de l'augmentation de la concentration en catalyseur (2)**

| | Catalyseur | Température de réaction | %mol de catalyseur⁽¹⁾ | Ratio R | Atmosphèr e | Début de réticulation |
|---|---|---|---|---|---|---|
| Formulation **25** (invention) | [Ni(acac)₂] | 110°C | 0,16% | 3,1 :1 | Non inerte | 5h |
| Formulation **26** (invention) | [Ni(acac)₂] | 110°C | 0,4% | 3,1 :1 | Non inerte | 1h30 |
| Formulation **27** (invention) | [Ni(acac)₂] | 110°C | 0,8% | 3,1:1 | Non inerte | 1h20 |
| Formulation **28** (invention) | [Ni(acac)₂] | 110°C | 1,6% | 3,1 :1 | Non inerte | 20min |
| Formulation **29** (invention) | [Ni(acac)₂] | 110°C | 3,1% | 3,1 :1 | Non inerte | 25min |

| | | | | | | |
|---|---|---|---|---|---|---|
| ⁽¹⁾ Exprimé en % molaire de nickel par nombre de moles de radicaux vinyles liés au silicium (Si-CH-CH₂) dans l'organopolysiloxane (M^{vi}D₇₀M^{vi}) | | | | | | |

Les formulations **12**, **19** et **24 à 29** selon l'invention montrent que l'augmentation de la concentration en catalyseur permet de diminuer significativement le temps de réticulation. La formulation **25** montre par ailleurs que la réticulation peut être observée même avec de très faibles teneurs en catalyseur, ce qui permet d'éviter ou de limiter la coloration du matériau réticulé.

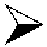 ***Etude de l'effet du ratio R***

**Tableau 9 : Effet du ratio R (1)**

| | Catalyseur | Température de réaction | %mol de catalyseur⁽¹⁾ | Ratio R | Début de réticulation |
|---|---|---|---|---|---|
| Formulation **14** (invention) | [Ni(acac)₂] | 110°C | 4% | 1:1 | 2h20 |
| Formulation **14A** (invention) | [Ni(acac)₂] | 110°C | 4% | 2:1 | 1h50 |

| | | | | | |
|---|---|---|---|---|---|
| (1) Exprimé en % molaire de nickel par nombre de moles de radicaux vinyles liés au silicium (Si-CH=CH₂) dans l'organopolysiloxane (M^{vi}D₇₀M^{vi}) | | | | | |

**Tableau 10 : Effet du ratio R (2)**

| | Catalyseur | Température de réaction | %mol de catalyseur⁽¹⁾ | Ratio R | Début de réticulation |
|---|---|---|---|---|---|
| Formulation **30** (invention) | [Ni(acac)₂] | 110°C | 1,6% | 0,8 :1 | 3h |
| Formulation **31** (invention) | [Ni(acac)₂] | 110°C | 1,6% | 3,1 :1 | 20 min |

| | | | | | |
|---|---|---|---|---|---|
| (1) Exprimé en % molaire de nickel par nombre de moles de radicaux vinyles liés au silicium (Si-CH=CH₂) dans l'organopolysiloxane (M^{vi}D₇₀M^{vi}) | | | | | |

Les réticulations sont opérées sous atmosphère non inerte. Les formulations **14** et **14A**, et **30** et **31** montrent que l'augmentation du ratio R permet de diminuer le temps de réticulation.

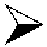 ***Durée de réticulation des catalyseurs (A), (B), (E) et (F)***

Enfin, on a testé la réticulation pour les catalyseurs **(A)**, **(B)**, **(E)** et **(F)** avec un ratio R de 1,6 :1. Les résultats sont présentés dans le tableau 8.

**Tableau 8 :**

| | Catalyseur | Température de réaction | %mol de catalyseur⁽¹⁾ | Ratio R | Début de réticulation |
|---|---|---|---|---|---|
| Formulation **32** (invention) | [Ni(acac)₂] | 110°C | 1,6% | 1,6:1 | 25-30min |
| Formulation **33** (invention) | [Ni(TMHD)₂] | 110°C | 1,6% | 1,6:1 | 30-35min |
| Formulation **34** (invention) | [Ni(cetoester)₂] | 110°C | 1,6% | 1,6:1 | 30 min |
| Formulation **35** (invention) | Ni(Rhodiastab)₂ | 110°C | 1,6% | 1,6:1 | 2h30-3h |

| | | | | | |
|---|---|---|---|---|---|
| (1) Exprimé en % molaire de nickel par nombre de moles de radicaux vinyles liés au silicium (Si-CH=CH₂) dans l'organopolysiloxane (M^{vi}D₇₀M^{vi}) | | | | | |

Les réticulations sont opérées sous atmosphère non inerte. Les formulations **32** à **35** montrent que la réticulation est observée pour différents catalyseurs à base de nickel au degré d'oxydation (II).

### EXEMPLE 3 : catalyseur [Ni(TMHD)₂] pour la réticulation de M^{vi} D₃₅₀ M^{vi} avec MD'₅₀M

### I) Constituants

1) Organopolysiloxane **A** de formule M^{vi}D₃₅₀M^{vi}, avec : Vi= Vinyle ; M^{vi}: (CH₃)₂ViSiO_{1/2} et D: (CH₃)₂SiO_{2/2}
2) Organohydrogénopolysiloxane **B** de formule : MD'₅₀M (1,58 mole d'atomes d'hydrogène liés au silicium pour 100g d'huile), avec : M: (CH₃)₃SiO_{1/2;} et D': (CH₃)HSiO_{2/2}
3) Catalyseur **(A)** tel que défini dans l'exemple 1.

### II) Formulations et résultats:

On a pesé 12,4 g de M^{vi}D₃₅₀M^{vi} avec : Vi= Vinyle ; M^{vi}: (CH₃)₂ViSiO_{1/2} et D: (CH₃)₂SiO_{2/2} et 0,6 g de MD'₅₀M (1,58mole d'atomes d'hydrogène liés au silicium pour 100g d'huile), avec : M: (CH₃)₃SiO_{1/2}, et D': (CH₃)HSiO_{2/2}

Le ratio R correspondant au rapport molaire des atomes d'hydrogène liés au silicium (Si-H) dans l'organohydrogénopolysiloxane (MD'₅₀M) sur les radicaux alcényles (ici vinyles) liés au silicium (Si-CH=CH₂) dans l'organopolysiloxane (M^{vi}D₃₅₀M^{vi}) de 10 :1. 5 mol% de catalyseur [Ni(TMHD)₂] (exprimé en % molaire de nickel par nombre de moles de radicaux vinyles liés au silicium (Si-CH=CH₂) dans l'organopolysiloxane (M^{vi}D₃₅₀M^{vi})) est dissout à température ambiante dans l'huile MD'50M et le mélange est incorporé à température ambiante dans l'huile M^{vi}D₃₅₀M^{vi}. L'ensemble est placé dans un moule téfloné puis dans une étuve à 110°C.

Après deux heures, le matériau réticulé est démoulé et sa dureté (en Shore A) mesurée. Le matériau présente une dureté de 9 en degré Shore A.

Cet exemple permet de montrer que la mise en oeuvre des catalyseurs revendiqués dans des réactions de réticulation de composé organopolysiloxane **A** avec un composé organohydrogénopolysiloxane **B** permet l'obtention de matériaux **Y** dont la dureté peut être mesurée.

## Revendications

1. Matériau silicone réticulé **Y** obtenu par chauffage à une température allant de 70 à 200°C, de préférence de 80 à 150°C, et plus préférentiellement de 80 à 130°C, d'une composition **X** réticulable comprenant :
- au moins un composé organopolysiloxane **A** comportant, par molécule, au moins deux radicaux alcényles en C₂-C₆ liés à des atomes de silicium,
- au moins un composé organohydrogénopolysiloxane **B** comportant, par molécule, au moins deux atomes d'hydrogène liés à un atome de silicium identique ou différent,
- au moins un catalyseur **C** qui est un complexe répondant à la formule suivante:
[Ni(L¹)₂]
dans laquelle:
- le symbole Ni représente le nickel au degré d'oxydation II,
- les symboles L¹, identiques ou différents, représentent un ligand qui est un anion β-dicarbonylato ou l'anion énolate d'un composé β-dicarbonylé,
- éventuellement au moins un promoteur d'adhérence **D** et
- éventuellement au moins une charge **E.**

2. Matériau silicone réticulé **Y** selon la revendication 1, **caractérisé en ce que** le catalyseur **C** est présent en une teneur allant de 0,001 à 10% molaire de nickel par nombre de moles de radicaux alcényles en C₂-C₆ liés à des atomes de silicium du composé organopolysiloxane **A**, de préférence de 0,01 à 7%, et plus préférentiellement de 0,1 à 5%.

3. Matériau silicone réticulé **Y** selon l'une quelconque des revendications précédentes, **caractérisé en ce que** la composition **X** est exempte de catalyseur à base de platine, de palladium, de ruthénium ou de rhodium.

4. Matériau silicone réticulé **Y** selon la revendication 1, **caractérisé en ce que** le ligand L¹ est un anion dérivé d'un composé de formule (1) :
R¹COCHR²COR³ **(1)**
dans laquelle :
- R¹ et R³, identiques ou différents, représentent un radical hydrocarboné en C₁-C₃₀ linéaire, cyclique ou ramifié, un aryle contenant entre 6 et 12 atomes de carbone, ou un radical -OR⁴ avec R⁴ qui représente un radical hydrocarboné en C₁-C₃₀ linéaire, cyclique ou ramifié,
- R² est un atome d'hydrogène ou un radical hydrocarboné, de préférence alkyle, comprenant de 1 à 4 atomes de carbone ; avec
- R¹ et R² peuvent être reliés pour former un cycle en C₅-C₆, et
- R² et R⁴ peuvent être reliés pour former un cycle en C₅-C₆.

5. Matériau silicone réticulé **Y** selon la revendication précédente, dans lequel le composé de formule **(1)** est choisi parmi le groupe constitué par les β-dicétones: 2,4-pentanedione (acac); l'hexanedione-2,4; heptanedione-2,4; heptanedione-3,5; l'éthyl-3 pentanedione-2,4; méthyl-5 hexanedione-2,4; octanedione-2,4; octanedione-3,5; diméthyl-5,5 hexanedione-2,4; méthyl-6 heptanedione-2,4; diméthyl-2, 2 nonanedione-3,5; diméthyl-2,6 heptanedione-3,5; 2-acétylcyclohexanone (*Cy-acac*)*;* 2,2,6,6-tétraméthyl-3,5-heptanedione (*TMHD*); 1,1,1,5,5,5-hexafluoro-2,4-pentanedione (F-acac)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; benzoylstéaroylméthane; benzoylpalmitoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane, et de préférence parmi les β-dicétones 2,4-pentanedione (acac) et 2,2,6,6-tétraméthyl-3,5-heptanedione (*TMHD*)*.*

6. Matériau silicone réticulé **Y** selon l'une quelconque des revendications précédente, dans lequel le catalyseur **C** est choisi parmi les complexes [Ni(acac)₂], [Ni(TMHD)₂], [Ni(cétoester)₂] et [Ni(Rhodiastab 50)₂], où « acac » signifie l'anion dérivé du composé 2,4-pentanedione, « THMD » signifie l'anion dérivé du composé 2,2,6,6-tétraméthyl-3,5-heptanedione, « cétoester » signifie l'anion dérivé d'un ester méthylique de l'acide acétylacétique et « Rhodiastab 50 » signifie un mélange d'anions dérivés du composé benzoylstéaroylméthane, et d'anions dérivés du composé benzoylpalmitoylméthane.

7. Matériau silicone réticulé **Y** selon la revendication précédente, **caractérisé en ce que** l'organopolysiloxane **A** comprend :
(i) au moins deux motifs siloxyles **(A.1)**, identiques ou différents, de formule suivante : 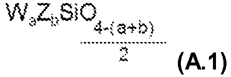
- dans laquelle :
- a= 1 ou 2, b= 0, 1 ou 2 et a+b= 1, 2 ou 3;
- les symboles W, identiques ou différents, représentent un groupement alcényle linéaire ou ramifié en C₂-C₆,
- et les symboles Z, identiques ou différents, représentent un groupe hydrocarboné monovalent ayant de 1 à 30 atomes de carbone, et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle,
(ii) et éventuellement au moins un motif siloxyle de formule suivante : 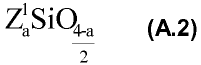 dans laquelle :
- a= 0, 1, 2 ou 3,
- les symboles Z¹, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone inclus et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

8. Matériau silicone réticulé **Y** selon l'une quelconque des revendications précédentes, dans lequel le composé organohydrogénopolysiloxane **B** comprend au moins trois atomes d'hydrogène par molécule directement liés à un atome de silicium identique ou différent.

9. Matériau silicone réticulé **Y** selon l'une quelconque des revendications précédentes, dans lequel le composé organohydrogénopolysiloxane **B** est un organopolysiloxane comprenant :
(i) au moins deux motifs siloxyles et, de préférence, au moins trois motifs siloxyles de formule suivante: 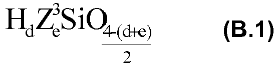 dans laquelle:
- d= 1 ou 2, e = 0, 1 ou 2 et d+e= 1, 2 ou 3,
- les symboles Z³, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle, et
(ii) éventuellement au moins un motif siloxyle de formule suivante : 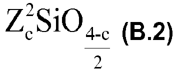 dans laquelle :
- c= 0, 1, 2 ou 3,
- les symboles Z², identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

10. Matériau silicone réticulé **Y** selon l'une quelconque des revendications précédentes, **caractérisé en ce que** la composition **X** comprend un second composé organopolysiloxane comportant, par molécule, au moins deux radicaux alcényles en C₂-C₆ liés à des atomes de silicium, différent du composé organopolysiloxane **A**, ledit second composé organopolysiloxane étant de préférence le divinyltétraméthylsiloxane.

11. Matériau silicone réticulé **Y** selon l'une quelconque des revendications précédentes, **caractérisé en ce que** les proportions de l'organopolysiloxane **A** et de l'organohydrogénopolysiloxane **B** sont telles que le rapport molaire des atomes d'hydrogène liés au silicium dans l'organohydrogénopolysiloxane **B** sur les radicaux alcényles liés au silicium dans l'organopolysiloxane **A** est compris entre 0,2 et 20, de préférence entre 0,5 et 15, plus préférentiellement entre 0,5 et 10 et encore plus préférentiellement entre 0,5 et 5.

12. Matériau silicone réticulé **Y** selon l'une quelconque des revendications précédentes, **caractérisé en ce que** la composition **X** comprend un ou plusieurs additifs fonctionnels choisi parmi:
- les résines silicone,
- les modulateurs d'adhérence,
- les additifs pour augmenter la consistance,
- les pigments, et
- les additifs de tenue thermique, de tenue aux huiles ou de tenue au feu, par exemple les oxydes métalliques.

13. Utilisation du catalyseur **C** tel que décrit selon l'une quelconques des revendications 1 à 12 comme catalyseur de réticulation de compositions silicones.

14. Composition **X** réticulable comprenant :
- au moins un composé organopolysiloxane **A** comportant, par molécule, au moins deux radicaux alcényles en C₂-C₆ liés à des atomes de silicium,
- au moins un composé organohydrogénopolysiloxane **B** comportant, par molécule, au moins deux atomes d'hydrogène liés à un atome de silicium identique ou différent,
- au moins un catalyseur **C** qui est un complexe répondant à la formule suivante:
[Ni (L¹)₂]
dans laquelle:
- le symbole Ni représente le nickel au degré d'oxydation II ;
- les symboles L¹, identiques ou différents, représentent un ligand qui est un anion β-dicarbonylato ou l'anion énolate d'un composé β-dicarbonylé,
- éventuellement au moins un promoteur d'adhérence **D** et
- éventuellement au moins une charge **E.**

15. Procédé de réticulation de compositions silicones, **caractérisé en ce qu'**il consiste à chauffer une composition **X** selon la revendication 14 à une température allant de 70 à 200°C, de préférence de 80 à 150°C, et plus préférentiellement de 80 à 130°C.

## Patentansprüche

1. Vernetztes Silikonmaterial **Y**, das durch Erwärmung einer vernetzbaren Zusammensetzung **X** auf eine Temperatur von 70 bis 200°C, vorzugsweise von 80 bis 150°C und weiter vorzugsweise von 80 bis 130°C erhalten wird, wobei die vernetzbare Zusammensetzung **X** Folgendes umfasst:
- mindestens eine Organopolysiloxanverbindung **A**, die pro Molekül mindestens zwei C₂-C₆-Alkenyl-Reste aufweist, die an Siliziumatome gebunden sind,
- mindestens eine Organohydrogenpolysiloxanverbindung **B**, die pro Molekül mindestens zwei Wasserstoffatome aufweist, die an ein identisches oder an verschiedene Siliziumatome gebunden sind,
- mindestens einen Katalysator **C**, bei dem es sich um einen Komplex mit der folgenden Formel handelt:
[Ni(L¹)₂]
bei der:
- das Symbol Ni Nickel mit einem Oxidationsgrad II bedeutet,
- die Symbole L¹, die identisch oder verschieden sind, einen Liganden bedeuten, bei dem es sich um ein β-Dicarbonylato-Anion oder ein Enolat-Anion einer β-Dicarbonylverbindung handelt,
- gegebenenfalls mindestens einen Haftvermittler **D** und
- gegebenenfalls mindestens einen Füllstoff **E.**

2. Vernetztes Silikonmaterial **Y** nach Anspruch 1, **dadurch gekennzeichnet, dass** der Katalysator **C** in einem Gehalt von 0,001 bis 10 Mol-% Nickel pro Anzahl der Mole der C₂-C₆-Alkenyl-Reste, die an Siliziumatome der Organopolysiloxanverbindung **A** gebunden sind, vorzugsweise von 0,01 bis 7 % und weiter vorzugsweise von 0,1 bis 5% vorhanden ist.

3. Vernetztes Silikonmaterial **Y** nach einem der vorhergehenden Ansprüche, **dadurch gekennzeichnet, dass** die Zusammensetzung **X** keinen Katalysator auf Platin-, Palladium-, Ruthenium- oder Rhodiumbasis enthält.

4. Vernetztes Silikonmaterial **Y** nach Anspruch 1, **dadurch gekennzeichnet, dass** der Ligand L¹ ein Anion ist, das abgeleitet ist von einer Verbindung mit der Formel (1):
R¹COCHR²COR³ **(1)**
bei der
- R¹ und R³, die identisch oder verschieden sind, einen linearen, zyklischen oder verzweigten C₁-C₃₀-Kohlenwasserstoff-Rest, ein Aryl mit 6 bis 12 Kohlenstoffatomen oder einen -OR⁴-Rest bedeuten, wobei R⁴ einen linearen, zyklischen oder verzweigten C₁-C₃₀-Kohlenwasserstoff-Rest bedeutet,
- R² ein Wasserstoffatom oder ein Kohlwasserstoff-Rest, vorzugsweise ein Alkyl-Rest mit 1 bis 4 Kohlenstoffatomen ist; wobei
- R¹ und R² verknüpft werden können, um einen C₅-C₆-Ring zu bilden, und
- R² und R⁴ verknüpft werden können, um einen C₅-C₆-Ring zu bilden.

5. Vernetztes Silikonmaterial **Y** nach dem vorhergehenden Anspruch, bei dem die Verbindung mit der Formel **(1)** aus der aus β-Diketonen bestehenden Gruppe ausgewählt ist: 2,4-Pentandion (acac); 2,4-Hexandion; 2,4-Heptandion; 3,5-Heptandion; 3-Ethyl-2,4-pentandion; 5-Methyl-2,4-hexandion; 2,4-Octandion; 3,5-Octandion; 5,5-Dimethyl-2,4-hexandion; 6-Methyl-2,4-heptandion; 2,2-Dimethyl-3,5-nonandion; 2,6-Dimethyl-3,5-heptandion; 2-Acetylcyclohexanon (Cy-acac); 2,2,6,6-Tetramethyl-3,5-heptandion (*TMHD*); 1,1,1,5,5,5-Hexafluor-2,4-pentandion (*F-acac*); Benzoylaceton; Dibenzoylmethan; 3-Methyl-2,4-pentandion; 3-Acetyl-2-pentanon; 3-Acetyl-2-hexanon; 3-Acetyl-2-heptanon; 3-Acetyl-5-methyl-2-hexanon; Benzoylstearoylmethan; Benzoylpalmitoylmethan; Octanoylbenzoylmethan; 4-t-Butyl-4'-methoxy-dibenzoylmethan; 4,4'-Dimethoxydibenzoylmethan und 4,4'-Di-tert-butyl-dibenzoylmethan, und vorzugsweise aus den β-Diketonen 2,4-Pentandion (acac) und 2,2,6,6-Tetramethyl-3,5-heptandion *(TMHD).*

6. Vernetztes Silikonmaterial **Y** nach einem der vorhergehenden Ansprüche, bei dem der Katalysator **C** aus den Komplexen [Ni(acac)₂], [Ni(TMHD)₂], [Ni(Ketoester)₂] und [Ni(Rhodiastab 50)₂] ausgewählt ist, wobei "acac" das aus der 2,4-Pentandion-Verbindung abgeleitete Anion bedeutet, "TMHD" das aus der 2,2,6,6-Tetramethyl-3,5-heptandion-Verbindung abgeleitete Anion bedeutet, "Ketoester" das aus einem Acetessigsäuremethylester abgeleitete Anion bedeutet und "Rhodiastab 50" eine Mischung aus Anionen bedeutet, die aus der Benzoylstearoylmethan-Verbindung abgeleitet sind, und aus Anionen, die aus der Benzoylpalmitoylmethan-Verbindung abgeleitet sind.

7. Vernetztes Silikonmaterial **Y** nach dem vorhergehenden Anspruch, **dadurch gekennzeichnet, dass** das Organopolysiloxan **A** Folgendes umfasst:
(i) mindestens zwei Siloxyl-Einheiten **(A.1)**, die identisch oder verschieden sind und folgende Formel haben: 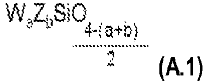 bei der
- a=1 oder 2, b=0, 1 oder 2, und a+b=1, 2 oder 3 sind;
- die Symbole W, die identisch oder verschieden sind, eine lineare oder verzweigte C₂-C₆-Alkenylgruppe bedeuten;
- und die Symbole Z, die identisch oder verschieden sind, eine monovalente Kohlenwasserstoffgruppe mit 1 bis 30 Kohlenstoffatomen bedeuten, die vorzugweise aus der Gruppe ausgewählt ist, die aus den Alkylgruppen mit 1 bis 8 Kohlenstoffatomen und den Arylgruppen mit 6 bis 12 Kohlenstoffatomen besteht, und weiter vorzugsweise aus der Gruppe ausgewählt ist, die aus einem Methyl-, Ethyl-, Propyl-, 3,3,3-Trifluor-propyl-, Xylyl-, Tolyl- und Phenyl-Rest besteht,
(ii) und gegebenenfalls mindestens eine Siloxyl-Einheit mit der folgenden Formel: 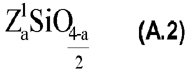 bei der:
- a=0, 1, 2 oder 3 ist;
- die Symbole Z¹, die identisch oder verschieden sind, eine monovalente Kohlenwasserstoffgruppe mit 1 bis 30 Kohlenstoffatomen bedeuten, die vorzugweise aus der Gruppe ausgewählt ist, die aus den Alkylgruppen mit 1 bis 8 Kohlenstoffatomen und den Arylgruppen mit 6 bis 12 Kohlenstoffatomen besteht, und weiter vorzugsweise aus der Gruppe ausgewählt ist, die aus einem Methyl-, Ethyl-, Propyl-, 3,3,3-Trifluor-propyl-, Xylyl-, Tolyl- und Phenyl-Rest besteht.

8. Vernetztes Silikonmaterial **Y** nach einem der vorhergehenden Ansprüche, bei dem die Organohydrogenpolysiloxanverbindung **B** mindestens drei Wasserstoffatome pro Molekül umfasst, die direkt an ein identisches oder an verschiedene Siliziumatome gebunden sind.

9. Vernetztes Silikonmaterial **Y** nach einem der vorhergehenden Ansprüche, bei dem es sich bei der Organohydrogenpolysiloxanverbindung **B** um ein Organopolysiloxan handelt, das Folgendes umfasst:
(i) mindestens zwei Siloxyl-Einheiten und vorzugsweise mindestens drei Siloxyl-Einheiten mit der folgenden Formel: 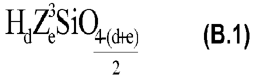 bei der
- d=1 oder 2, e=0, 1 oder 2, und d+e=1, 2 oder 3 sind;
- die Symbole Z³, die identisch oder verschieden sind, eine monovalente Kohlenwasserstoffgruppe mit 1 bis 30 Kohlenstoffatomen bedeuten, die vorzugweise aus der Gruppe ausgewählt ist, die aus den Alkylgruppen mit 1 bis 8 Kohlenstoffatomen und den Arylgruppen mit 6 bis 12 Kohlenstoffatomen besteht, und weiter vorzugsweise aus der Gruppe ausgewählt ist, die aus einem Methyl-, Ethyl-, Propyl-, 3,3,3-Trifluor-propyl-, Xylyl-, Tolyl- und Phenyl-Rest besteht,
(ii) gegebenenfalls mindestens eine Siloxyl-Einheit mit der folgenden Formel 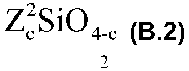 bei der:
- c=0, 1, 2 oder 3 ist;
- die Symbole Z², die identisch oder verschieden sind, eine monovalente Kohlenwasserstoffgruppe mit 1 bis 30 Kohlenstoffatomen bedeuten, die vorzugweise aus der Gruppe ausgewählt ist, die aus den Alkylgruppen mit 1 bis 8 Kohlenstoffatomen und den Arylgruppen mit 6 bis 12 Kohlenstoffatomen besteht, und weiter vorzugsweise aus der Gruppe ausgewählt ist, die aus einem Methyl-, Ethyl-, Propyl-, 3,3,3- Trifluo-
propyl-, Xylyl-, Tolyl- und Phenyl-Rest besteht.

10. Vernetztes Silikonmaterial **Y** nach einem der vorhergehenden Ansprüche, **dadurch gekennzeichnet, dass** die Zusammensetzung **X** eine zweite Organopolysiloxanverbindung umfasst, die pro Molekül mindestens zwei C₂-C₆-Alkenyl-Reste aufweist, die an Siliziumatome gebunden sind, und die sich von der Organopolysiloxanverbindung **A** unterscheidet, wobei es sich bei der zweiten Organopolysiloxanverbindung vorzugsweise um Divinyltetramethylsiloxan handelt.

11. Vernetztes Silikonmaterial **Y** nach einem der vorhergehenden Ansprüche, **dadurch gekennzeichnet, dass** die Anteile des Organopolysiloxans **A** und des Organohydrogenpolysiloxans **B** derart sind, dass das Molverhältnis der an das Silizium gebundenen Wasserstoffatome in dem Organohydrogenpolysiloxan **B** zu den an das Silizium gebundenen Alkenyl-Resten in dem Organopolysiloxan **A** zwischen 0,2 und 20, vorzugsweise zwischen 0,5 und 15, weiter vorzugsweise zwischen 0,5 und 10 und weiter vorzugsweise zwischen 0,5 und 5 beträgt.

12. Vernetztes Silikonmaterial **Y** nach einem der vorhergehenden Ansprüche, **dadurch gekennzeichnet, dass** die Zusammensetzung **X** einen oder mehrere funktionelle Zusatzstoffe umfasst, ausgewählt aus:
- Silikonharzen,
- Haftmodifiziermitteln,
- Zusatzstoffen zur Erhöhung der Konsistenz,
- Pigmenten und
- Wärmebeständigkeits-, Ölbeständigkeits- oder Feuerbeständigkeitszusatzstoffen, z.B. Metalloxiden.

13. Verwendung des Katalysators **C** nach einem der Ansprüche 1 bis 12 als Katalysator zur Vernetzung von Silikonzusammensetzungen.

14. Vernetzbare Zusammensetzung **X**, die Folgendes umfasst:
- mindestens eine Organopolysiloxanverbindung **A**, die pro Molekül mindestens zwei C₂-C₆-Alkenyl-Reste aufweist, die an Siliziumatome gebunden sind,
- mindestens eine Organohydrogenpolysiloxanverbindung **B**, die pro Molekül mindestens zwei Wasserstoffatome aufweist, die an ein identisches oder an verschiedene Siliziumatome gebunden sind,
- mindestens einen Katalysator **C**, bei dem es sich um einen Komplex mit der folgenden Formel handelt:
[Ni(L¹)₂]
bei der:
- das Symbol Ni Nickel mit einem Oxidationsgrad II bedeutet,
- die Symbole L¹, die identisch oder verschieden sind, einen Liganden bedeuten, bei dem es sich um ein β-Dicarbonylato-Anion oder ein Enolat-Anion einer β-Dicarbonylverbindung handelt,
- gegebenenfalls mindestens einen Haftvermittler **D** und
- gegebenenfalls mindestens einen Füllstoff **E.**

15. Verfahren zur Vernetzung von Silikonzusammensetzungen, **dadurch gekennzeichnet, dass** es darin besteht, eine Zusammensetzung **X** nach Anspruch 14 auf eine Temperatur von 70 bis 200°C, vorzugsweise von 80 bis 150°C und weiter vorzugsweise von 80 bis 130°C zu erwärmen.

## Claims

1. Crosslinked silicone material Y obtained by heating to a temperature of between 70 and 200°C, preferably between 80 and 150°C, and more preferably between 80 and 130°C, a crosslinkable composition X comprising:
- at least one organopolysiloxane compound A comprising, per molecule, at least two C₂-C₆ alkenyl radicals bonded to silicon atoms,
- at least one organohydrogenopolysiloxane compound B comprising, per molecule, at least two hydrogen atoms bonded to an identical or different silicon atom,
- at least one catalyst C which is a complex corresponding to the following formula:
[Ni(L¹)2]
in which:
- the symbol Ni represents nickel at degree of oxidation II,
- the symbols L¹, which may be identical or different, represent a ligand which is a β-dicarbonylato anion or the enolate anion of a β-dicarbonylated compound,
- optionally at least one adhesion promoter D and
- optionally at least one charge E.

2. Crosslinked silicone material Y according to claim 1, **characterised in that** the catalyst C is present in a content ranging from 0.001 to 10% molar of nickel per number of moles of C₂-C₆ alkenyl radicals bonded to silicon atoms of the organopolysiloxane compound A, preferably between 0.01 to 7%, and more preferably between 0.1 to 5%.

3. Crosslinked silicone material Y according to any of the preceding claims, **characterised in that** the composition X is free of catalyst based on platinum, palladium, ruthenium or rhodium.

4. Crosslinked silicone material Y according to claim 1, **characterised in that** the ligand L¹ is an anion derived from a compound of formula (1):
R¹COCHR²COR³ (1)
in which:
- R¹ and R³, which may be identical or different, represent a C₁-C₃₀ linear, cyclic or branched hydrocarbon radical, an aryl containing between 6 and 12 carbon atoms, or a -OR⁴ radical with R⁴ which represents a C₁-C₃₀ linear, cyclic or branched hydrocarbon radical,
- R² is a hydrogen atom or a hydrocarbon radical, preferably alkyl, comprising from 1 to 4 carbon atoms; with
- R¹ and R² can be connected in order to form a C₅-C₆ cycle, and
- R² and R⁴ can be connected in order to form a C₅-C₆ cycle.

5. Crosslinked silicone material Y according to the preceding claim, wherein the compound of formula (1) is chosen from the group comprising β-diketones: 2,4-pentanedione (acac); hexanedione-2,4; heptanedione-2,4; heptanedione-3,5; ethyl-3 pentanedione-2,4; methyl-5 hexanedione-2,4; octanedione-2,4; octanedione-3,5; dimethyl-5,5 hexanedione-2,4; methyl-6 heptanedione-2,4; dimethyl-2, 2 nonanedione-3,5; dimethyl-2,6 heptanedione-3,5; 2-acetylcyclohexanone (Cy-acac); 2,2,6,6-tetramethyl-3,5-heptanedione (TMHD); 1,1,1,5,5,5-hexafluoro-2,4-pentanedione (F-acac)]; benzoylacetone; dibenzoyl-methane; 3-methyl-2,4-pentadione; 3-acetyl-pentane-2-one; 3-acetyl-2-hexanone; 3-acetyl-2-heptanone; 3-acetyl-5-methyl-2-hexanone; benzoylstearoylmethane; benzoylpalmitoylmethane; octanoylbenzoylmethane; 4-t-butyl-4'-methoxy-dibenzoylmethane; 4,4'-dimethoxydibenzoylmethane and 4,4'-di-tert-butyl-dibenzoylmethane, and preferably from β-diketones 2,4-pentanedione (acac) and 2,2,6,6-tetramethyl-3,5-heptanedione (TMHD).

6. Crosslinked silicone material Y according to any of the preceding claims, wherein the catalyst C is chosen from the complexes [Ni(acac)₂], [Ni(TMHD)₂], [Ni(ketoester)₂] and [Ni(Rhodiastab 50)₂], where "acac" means the anion derived from the compound 2,4-pentanedione, "THMD" means the anion derived from the compound 2,2,6,6-tetramethyl-3,5-heptanedione, "ketoester" means the anion derived from a methyl ester of acetoacetic acid and "Rhodiastab 50" means a mixture of anions derived from the compound benzoylstearoylmethane, and of anions derived from the compound benzoylpalmitoylmethane.

7. Crosslinked silicone material Y according to the preceding claim, **characterised in that** the organopolysiloxane A comprises:
(i) at least two siloxyl units (A.1), which may be identical or different, of the following formula: 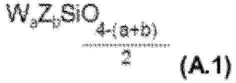
- in which:
-- a= 1 or 2, b= 0, 1 or 2 and a+b= 1, 2 or 3;
--- the symbols W, which may be identical or different, represent a C₂-C₆ linear or branched alkenyl group,
--- and the symbols Z, which may be identical or different, represent a monovalent hydrocarbon group having from 1 to 30 carbon atoms, and preferably chosen from the group consisting of alkyl groups having from 1 to 8 carbon atoms and aryl groups containing between 6 and 12 carbon atoms, and more preferably chosen from the group consisting of a methyl, ethyl, propyl, 3,3,3-trifluoropropyl, xylyl, tolyl and phenyl radical,
(ii) and optionally at least one siloxyl unit of the following formula: 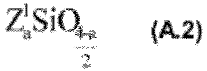 in which:
- a= 0, 1, 2 or 3,
- the symbols Z¹, which may be identical or different, represent a monovalent hydrocarbon group having from 1 to 30 carbon atoms and preferably chosen from the group consisting of alkyl groups having from 1 to 8 carbon atoms inclusive and aryl groups containing between 6 and 12 carbon atoms, and more preferably chosen from the group consisting of a methyl, ethyl, propyl, 3,3,3-trifluoropropyl, xylyl, tolyl and phenyl radical.

8. Crosslinked silicone material Y according to any of the preceding claims, wherein the organohydrogenopolysiloxane compound B comprises at least three hydrogen atoms per molecule directly bonded to an identical or different silicon atom.

9. Crosslinked silicone material Y according to any of the preceding claims, wherein the organohydrogenopolysiloxane compound B is an organopolysiloxane comprising:
(i) at least two siloxyl units and, preferably, at least three siloxyl units of the following formula: 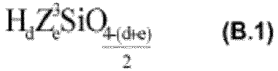 in which:
- d= 1 or 2, e = 0, 1 or 2 and d+e= 1, 2 or 3,
- the symbols Z³, which may be identical or different, represent a monovalent hydrocarbon group having from 1 to 30 carbon atoms and preferably chosen from the group consisting of alkyl groups having from 1 to 8 carbon atoms and aryl groups containing between 6 and 12 carbon atoms, and more preferably chosen from the group consisting of a methyl, ethyl, propyl, 3,3,3-trifluoropropyl, xylyl, tolyl and phenyl radical, and
(ii) optionally at least one siloxyl unit of the following formula: 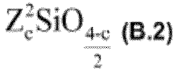 in which:
- c= 0, 1, 2 or 3,
- the symbols Z², which may be identical or different, represent a monovalent hydrocarbon group having from 1 to 30 carbon atoms and preferably chosen from the group consisting of alkyl groups having from 1 to 8 carbon atoms and aryl groups containing between 6 and 12 carbon atoms, and more preferably chosen from the group consisting of a methyl, ethyl, propyl, 3,3,3-trifluoropropyl, xylyl, tolyl and phenyl radical.

10. Crosslinked silicone material Y according to any of the preceding claims, **characterised in that** the composition X comprises a second organopolysiloxane compound comprising, per molecule, at least two C₂-C₆ alkenyl radicals bonded to silicon atoms, different from the organopolysiloxane compound A, said second organopolysiloxane compound being preferably divinyltetramethylsiloxane.

11. Crosslinked silicone material Y according to any of the preceding claims, **characterised in that** the proportions of the organopolysiloxane A and of the organohydrogenopolysiloxane B are such that the molar ratio of the hydrogen atoms bonded to the silicon in the organohydrogenopolysiloxane B to the alkenyl radicals bonded to the silicon in the organopolysiloxane A is between 0.2 and 20, preferably between 0.5 and 15, more preferably between 0.5 and 10 and even more preferably between 0.5 and 5.

12. Crosslinked silicone material Y according to any of the preceding claims, **characterised in that** the composition X comprises one or several functional additives chosen from:
- silicone resins,
- adherence modulators,
- additives for increasing consistency,
- pigments, and
- heat-resistant, oil-resistant or fire-resistant additives, for example metal oxides.

13. Use of the catalyst C such as described according to any one of claims 1 to 12 as silicone composition crosslinking catalyst.

14. Crosslinkable composition X comprising:
- at least one organopolysiloxane compound A comprising, per molecule, at least two C₂-C₆ alkenyl radicals bonded to silicon atoms,
- at least one organohydrogenopolysiloxane compound B comprising, per molecule, at least two hydrogen atoms bonded to an identical or different silicon atom,
- at least one catalyst C which is a complex corresponding to the following formula:
[Ni (L¹)₂]
in which:
- the symbol Ni represents nickel at degree of oxidation II;
- the symbols L¹, which may be identical or different, represent a ligand which is a β-dicarbonylato anion or the enolate anion of a β-dicarbonylated compound,
- optionally at least one adhesion promoter D and
- optionally at least one charge E.

15. Method for crosslinking silicone compositions, **characterised in that** it consists in heating a composition X according to claim 14 to a temperature of between 70 and 200°C, preferably between 80 and 150°C, and more preferably between 80 and 130°C.
